# EUROPÄISCHE PATENTSCHRIFT

(11) **EP 1 144 837 B1**
(45) Veröffentlichungstag und Bekanntmachung des Hinweises auf die Patenterteilung: **24.11.2004**
(21) Anmeldenummer: 00960652.6
(22) Anmeldetag: 13.09.2000
(51) Int. Cl.: F02M 37/10, F04B 17/04, F04B 49/24, F04C 15/00

(54) **KRAFTSTOFF-FÖRDERPUMPE FÜR EIN KRAFTFAHRZEUG UND EIN MIT EINER SOLCHEN KRAFTSTOFF-FÖRDERPUMPE VERSEHENES KRAFTSTOFF-FÖRDERSYSTEM**
FUEL SUPPLY PUMP FOR A VEHICLE AND A FUEL SUPPLY SYSTEM EQUIPPED WITH SAID FUEL SUPPLY PUMP
POMPE D'ALIMENTATION EN CARBURANT POUR UN VEHICULE AUTOMOBILE ET SYSTEME D'ALIMENTATION EN CARBURANT EQUIPE D'UNE TELLE POMPE

(30) Priorität: 16.10.1999 DE 19949902
(43) Veröffentlichungstag der Anmeldung: 17.10.2001
(73) Patentinhaber: Bayerische Motoren Werke Aktiengesellschaft, 80809 München (DE)
(72) Erfinder: FISCHER, Gregor, 85737 Ismaning (DE)
(86) Internationale Anmeldenummer: PCT/EP2000/008918
(87) Internationale Veröffentlichungsnummer: WO 2001/029394

(56) Entgegenhaltungen:
- GB-A- 1 358 135
- US-A- 3 734 292
- US-A- 4 181 473
- US-A- 4 934 907

## Beschreibung

Die Erfindung betrifft eine Kraftstoff-Förderpumpe für ein Kraftfahrzeug gemäß dem Oberbegriff des Anspruchs 1 sowie ein mit einer Kraftstoff-Förderpumpe versehenes Kraftstoff-Fördersystem gemäß dem Oberbegriff des Anspruchs 4 (siehe GB-A-1358135).

Aus der DE 43 44 777 C2 ist bereits ein Kraftstoff-Versorgungssystem für ein Kraftfahrzeug bekannt, bei dem der Kraftstofftank, das Vorlaufleitungssystem und die Einspritzleiste wärmedämmend isoliert sind. Nicht berücksichtigt bei diesem bekannten Kraftstoff-Versorgungssystem ist jedoch, dass auch die Kraftstoff-Förderpumpe Wärme an den die Kraftstoff-Förderpumpe umgebenden Kraftstoff abgibt.

Aufgabe der Erfindung ist es, eine Kraftstoff-Förderpumpe für ein Kraftfahrzeug und ein mit einer solchen Kraftstoff-Förderpumpe versehenes Kraftstoff-Fördersystem zu schaffen, bei dem die Erwärmung eines im Kraftstoff-Fördersystem befindlichen Kraftstoffes verringert ist.

Diese Aufgabe wird für die erfindungsgemäße Kraftstoff-Förderpumpe durch die Merkmale des Anspruchs 1 und für das erfindungsgemäße Kraftstoff-Fördersystem durch die Merkmale des Anspruchs 4 gelöst.

Bei der erfindungsgemäßen Kraftstoff-Förderpumpe ist es von Vorteil, dass ein Innenraum eines Gehäuses der Kraftstoff-Förderpumpe vollständig nur noch von der Kraftstoffmenge durchströmt wird, die einem Verbrennungsmotor zugeführt wird. Eine Kraftstoff-Teilmenge wird aus dem Gehäuse der Kraftstoff-Förderpumpe zu einem Druckregler abgezweigt. Bei dem erfindungsgemäßen Kraftstoff-Fördersystem fließt der abgezweigte Kraftstoff vom Druckregler zurück in einen Kraftstoffbehälter des Kraftstoff-Fördersystems.

Der Innenraum des erfindungsgemäßen Gehäuses der Kraftstoff-Förderpumpe ist so aufgebaut, dass der zum Motor geförderte Kraftstoff zunächst die Verlustwärme des Stators des Elektromotors aufnimmt und anschließend die Außenoberfläche des Rotors kühlt. Durch die Zufuhr von kaltem Kraftstoff an die Oberflächen des elektrischen Antriebmotors ist sichergestellt, dass auch die Außenoberfläche des Gehäuses der erfindungsgemäßen Kraftstoff-Förderpumpe nur eine geringe Temperatur erreicht und somit über die Oberfläche des Gehäuses der Kraftstoff-Förderpumpe nur sehr wenig Wärme an den die Kraftstoff-Förderpumpe umgebenden Kraftstoff abgegeben werden kann.

Vorteilhafterweise ist die Oberfläche des Gehäuses der erfindungsgemäßen Kraftstoff-Förderpumpe wärmeisoliert. Dadurch wird die Erwärmung des Kraftstoffes des erfindungsgemäßen Kraftstoff-Fördersystems verringert. Durch die Verringerung der in das erfindungsgemäße Kraftstoff-Fördersystem eingebrachten Wärme bleiben die Temperaturen des Kraftstoffes im Kraftstoffbehälter niedriger. Damit ergeben sich gleichzeitig geringere Gasentwicklungsraten und dadurch eine reduzierte Emission.

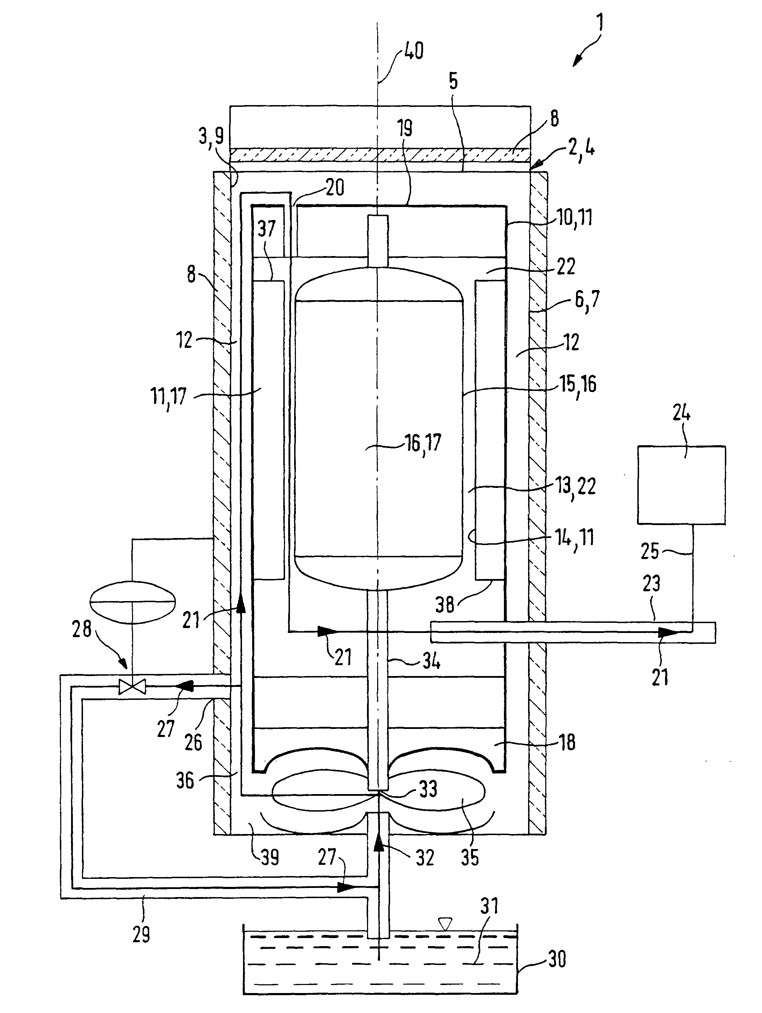

Eine Ausführungsform der Erfindung wird nachstehend anhand der einzigen Zeichnung beispielshalber beschrieben, die eine Prinzipdarstellung eines Kraftstoff-Fördersystems 1 mit einer im Längsschnitt dargestellten Kraftstoff-Förderpumpe 2 zeigt. Die in der Figur gezeigte Kraftstoff-Förderpumpe 2 ist an einer Außenfläche 4 einer oberen Stirnseite 5 und an einer Außenfläche 6 einer Mantelfläche 7 eines äußeren Gehäuses 3 mit einer Isolationsschicht 8 umgeben.

Zwischen einer Innenwand 9 des rotationssymmetrischen, äußeren Gehäuses 3 und einer Außenwand 10 eines Stators 11 eines elektrischen Antriebsmotors 17 ist ein äußerer Zwischenraum 12 ausgebildet, wobei die Außenwand 10 in der gezeigten Ausführungsform Teil einer Wand eines inneren Gehäuses 18 ist. Der Zwischenraum 12 weist unterhalb eines unteren Endes 38 des Stators 11 mindestens eine Einlassöffnung 36 auf. Ein innerer Zwischenraum 13 ergibt sich zwischen einer Innenwand 14 des Stators 11 und einer Außenwand 15 eines Rotors 16 des elektrischen Antriebsmotors 17.

Der Rotor 16 ist um eine Achse 40 drehbar. Das innere Gehäuse 18 umgibt den Rotor 16 vollständig. An einem unteren Ende 33 einer Rotorwelle 34 ist eine Pumpvorrichtung 35, z. B. in Form von Flügeln oder dergleichen, vorgesehen, die sich in einem unterhalb des inneren Gehäuses 18 ausgebildeten Raum 39 des äußeren Gehäuse 3 drehen kann.

Dieses innere Gehäuse 18 weist in der gezeigten Ausführungsform an ihrer oberen Stirnfläche 19 oberhalb eines oberen Endes 37 des Stators 11 eine Eintrittsöffnung 20 auf, durch die ein durch einen Pfeil 21 dargestellter Kraftstoffstrom bzw. eine Kraftstoff-Teilmenge 21 in einen Innenraum 22 und damit in den inneren Zwischenraum 13 gelangen kann. Das innere Gehäuse 18 ist mit einem Austrittsstutzen 23 oder dergleichen versehen, durch die der Kraftstoffstrom 21 zu einem Motor 24 über Leitungen 25 fließen kann.

Das äußere Gehäuse 3 weist eine weitere Auslassöffnung 26 auf, durch die eine durch einen Pfeil 27 dargestellte Kraftstoff-Teilmenge zu einem Druckregler 28 strömen kann. Die Teilmenge 27 fließt vom Druckregler 28 über eine Leitung 29 zurück zu einem Kraftstoffbehälter 30. Aus dem Kraftstoffbehälter 30 fördert die Kraftstoff-Förderpumpe 2 eine mit einem Pfeil 32 dargestellte Kraftstoffgesamtmenge aus dem mit Kraftstoff 31 gefüllten Kraftstoffbehälter 30.

## Patentansprüche

1. Kraftstoff-Förderpumpe (2) für ein Kraftfahrzeug, mit einem Gehäuse (18), in dem ein Statör (11) mit einem Rotor (16) eines elektrischen Antriebsmotors (17) angeordnet ist, wobei zwischen einer Innenwand (14) des Stators (11) und einer Außenwand (15) des Rotors (16) ein innerer Zwischenraum (13) vorgesehen ist, wobei das Gehäuse (18) des elektrischen Antriebsmotors (17) unter Bildung eines äußeren Zwischenraumes (12) von einem äußeren Gehäuse (3) umgeben ist, und wobei sich eine von der Kraftstoff-Förderpumpe (2) in das äußere Gehäuse (3) geförderte Kraftstoff-Gesamtmenge (32) in zwei Kraftstoff-Teilmengen (21, 27) aufteilt und die eine Kraftstoff-Teilmenge (27) zu einem Druckregler (28) strömt; **dadurch gekennzeichnet, dass** die andere von einem Motor (24) benötigte Kraftstoff-Teilmenge (21) nach Durchströmung des äußeren Zwischenraumes (12) und des inneren Zwischenraumes (13) aus der Kraftstoff-Förderpumpe (2) fließt.

2. Kraftstoff-Förderpumpe nach Anspruch 1, **dadurch gekennzeichnet, dass** der äußere Zwischenraum (12) mindestens eine Einlassöffnung (36) aufweist, durch die die von der Kraftstoff-Förderpumpe (2) geförderte Kraftstoff-Gesamtmenge (32) in den äußeren Zwischenraum (12) einströmen kann und dass vor einem unteren Ende (38) einer Außenwand (10) des Stators (11) in dem äußeren Gehäuse (3) mindestens eine Auslassöffnung (26) ausgebildet ist, durch die die Kraftstoff-Teilmenge (27) zu dem Druckregler (28) strömen kann, dass das Gehäuse (18) mindestens eine Eintrittsöffnung (20) oberhalb eines oberen Endes (37) der Außenwand (10) des Stators (11) aufweist, durch die die von dem Motor (24) benötigte Kraftstoff-Teilmenge (21) nach Durchströmung des inneren Zwischenraumes (13) zu mindestens einem Austrittsstutzen (23) oder dergleichen gelangen kann, der unterhalb eines unteren Endes (38) des Stators (11) ausgebildet ist.

3. Kraftstoff-Förderpumpe nach den Ansprüchen 1 oder 2, **dadurch gekennzeichnet, dass** mindestens die Mantelfläche (7) des äußeren Gehäuses (3) von einer Wärme-Isolationsschicht (7) umgeben ist.

4. Kraftstoff-Fördersystem, das mit einer Kraftstoff-Förderpumpe (2) nach einem der Ansprüche 1 bis 3 versehen ist, wobei das Kraftstoff-Fördersystem einen Kraftstoffbehälter (30) aufweist, aus dem die Kraftstoff-Förderpumpe (2) Kraftstoff (31) zu einem Motor (24) und gleichzeitig zu einem Druckregler (28) fördert, **dadurch gekennzeichnet, dass** die durch den Kraftstoff-Druckregler (28) strömende Kraftstoff-Teilmenge (27) zurück zum Kraftstoffbehälter (30) strömt.

## Claims

1. A fuel feed pump (2) for a motor vehicle, comprising a housing (18), in which a stator (11) with a rotor (16) of an electric drive motor (17) is arranged, wherein an inner space (13) is provided between an inner wall (14) of the stator (11) and an outer wall (15) of the rotor (16), wherein the housing (18) of the electric drive motor (17) is surrounded by an outer housing (3) with the formation of an outer space (12), and wherein a total quantity (32) of fuel fed from the fuel feed pump (2) into the outer housing (3) is divided into two part quantities (21, 27) of fuel and one part quantity (27) of fuel flows to a pressure regulator (28), **characterised in that** the other part quantity (21) of fuel required by an engine (24), after flowing through the outer space (12) and the inner space (13), flows out of the fuel feed pump (2).

2. A fuel feed pump according to claim 1, **characterised in that** the outer space (12) has at least one inlet opening (36) through which the total quantity (32) of fuel fed from the fuel feed pump (2) can flow into the outer space (12) and **in that** formed upstream from a lower end (38) of an outer wall (10) of the stator (11) in the outer housing (3) is at least one outlet opening (26) through which the part quantity (27) of fuel can flow to the pressure regulator (28), **in that** the housing (18) has at least one inlet opening (20) above an upper end (37) of the outer wall (10) of the stator (11), through which the part quantity (21) of fuel required by the engine (24), after flowing through the inner space (13), can arrive at at least one outlet pipe (23) or the like which is formed below a lower end (38) of the stator (11).

3. A fuel feed pump according to claims 1 or 2, **characterised in that** at least the lateral surface (7) of the outer housing (3) is surrounded by a heat insulation layer (7).

4. A fuel feed system which is provided with a fuel feed pump (2) according to any one of claims 1 to 3, wherein the fuel feed system has a fuel tank (30), from which the fuel feed pump (2) feeds fuel (3) to an engine (24) and simultaneously to a pressure regulator (28), **characterised in that** the part quantity (27) of fuel flowing through the fuel pressure regulator (28) flows back to the fuel tank (30).

## Revendications

1. Pompe d'alimentation en carburant (2) pour un véhicule automobile, avec un carter (18) dans lequel est disposé un stator (11) avec un rotor (16) d'un moteur d'entraînement électrique (17), un espace intermédiaire intérieur (13) étant prévu entre une paroi intérieure (14) du stator (11) et une paroi extérieure (15) du rotor (16), le carter (18) du moteur d'entraînement électrique (17) étant entouré d'un carter extérieur (3) en formant un espace intermédiaire extérieur (12), et une quantité totale de carburant (32) transportée de la pompe d'alimentation en carburant (2) vers le carter extérieur (3) se divisant en deux quantités partielles de carburant (21, 27), et une quantité partielle de carburant (27) s'écoule vers un régulateur de pression (28),
**caractérisée en ce que**
l'autre quantité partielle de carburant (21) demandé par un moteur (24) s'écoule hors de la pompe d'alimentation en carburant (2) après avoir traversé en s'écoulant l'espace intermédiaire extérieur (12) et l'espace intermédiaire intérieur (13).

2. Pompe d'alimentation en carburant selon la revendication 1,
**caractérisée en ce que**
l'espace intermédiaire extérieur (12) présente au moins une ouverture d'admission (36) à travers laquelle la quantité totale de carburant (32) transportée par la pompe d'alimentation en carburant (2) peut entrer en s'écoulant dans l'espace intermédiaire extérieur (12), et en amont d'une extrémité inférieure (38) d'une paroi extérieure (10) du stator (11) dans le carter extérieur (3) est formée au moins une ouverture de sortie (26) à travers laquelle la quantité partielle de carburant (27) peut s'écouler vers le régulateur de pression (28), le carter (18) présente au moins une ouverture d'entrée (20) au-dessus d'une extrémité supérieure (37) de la paroi extérieure (10) du stator (11), ouverture à travers laquelle, après avoir traversé en s'écoulant l'espace intermédiaire intérieur (13), la quantité partielle de carburant (21) demandé par le moteur (24) peut atteindre au moins un manchon de sortie (23) ou similaire formé en dessous d'une extrémité inférieure (38) du stator (11)).

3. Pompe d'alimentation en carburant selon la revendication 1 ou 2,
**caractérisée en ce qu'**
au moins la surface de l'enveloppe (7) du carter extérieur (3) est entourée d'une couche thermo-isolante (7).

4. Système d'alimentation en carburant pourvu d'une pompe d'alimentation en carburant (2) selon l'une quelconque des revendications 1 à 3, le système d'alimentation en carburant présentant un récipient de carburant (30) duquel la pompe d'alimentation en carburant (2) transporte du carburant (31) vers un moteur (24) et en même temps vers un régulateur de pression (28),
**caractérisé en ce que**
la quantité partielle de carburant (27) s'écoulant à travers le régulateur de pression de carburant (28) retourne en s'écoulant vers le récipient de carburant (30).
